Europäisches Patentamt

European Patent Office

Office européen des brevets

(11) Publication number: **0 202 354**
**B1**

# EUROPEAN PATENT SPECIFICATION

(45) Date of publication of patent specification: **10.01.90**

(21) Application number: **85106316.4**

(22) Date of filing: **23.05.85**

(51) Int. Cl.⁵: **F 16 K 31/05**

(54) Remote-control apparatus for opening or closing the valve of containers or the like.

(43) Date of publication of application:
**26.11.86 Bulletin 86/48**

(45) Publication of the grant of the patent:
**10.01.90 Bulletin 90/02**

(84) Designated Contracting States:
**BE DE FR GB NL**

(56) References cited:
**DE-B-2 457 778**
**DE-C- 844 386**
**GB-A- 811 640**
**US-A-4 429 591**

**PATENT ABSTRACTS OF JAPAN, vol. 7, no. 35
(P-175)1180r, 10th February 1983; & JP - A - 57
187 711 (WATANABE) 18-11-1982**

(73) Proprietor: **JAPAN OXYGEN CO., LTD.**
**No. 16-7, Nishi-Shinbashi 1-chome**
**Minato-ku Tokyo (JP)**

(72) Inventor: **Tsuchiya, Yuji**
**No. 3-2, Toyotamanaka**
**Nerima-ku Tokyo (JP)**
Inventor: **Ando, Hiroshi**
**No. 2-2, Chihaya-cho**
**Toshima-ku Tokyo (JP)**

(74) Representative: **Schmidt, Horst, Dr.**
**Patentanwälte Pohlmann & Schmidt**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a remote-control apparatus for opening or closing the valve of a container and, more specifically, to an apparatus most suited for opening or closing a gas cylinder filled therein with toxic gases such as those used for the production of semiconductor materials in a remote-controlled manner.

Background of the Invention

Gases such as arsine, phosphine, silane, diborane, dichlorosilane, hydrogen chloride, chlorine, etc. are used for the production of semiconductor materials, but, when diffused in the air, these gases are very hazardous in view of safety and is thus unpreferred owing to their toxicity, ignitability and corrosiveness.

Opening or closing of cylinders containing such gases are carried out by hands, for example, in the replacement thereof. However, there is a fear that the operators may be exposed to them in unexpected accidents such as failure of the caps.

In case of some accidents at places where the aforesaid gases are used or on piping terminating thereat, an emergency shut-off valve is usually mounted in the piping from the gas cylinder to those places to shut off the supply of such gases. However, when a piping trouble arises upstream of the emergency valve, the gases continue to flow out so that the valve of the cylinder should be closed to positively shut off the supply of the gases. Furthermore, even after that trouble is removed, it is advantageous in view of safety that the gases are supplied by opening the valve of the cylinder in a remote-controlled manner.

A known remote-control apparatus of the type referred to above (JP-A-57 187 711, GB-A-811 640) comprises coupling means fixed to an operating shaft for rotating the valve wheel of a container. This type of apparatus causes trouble when the apparatus is to be removed from a cylinder and replaced on another cylinder. A main reason for such inconveniences is that the engagement and disengagement of the coupling means with or from the valve wheel of the container require removal of the whole apparatus and thereby this work is dependent in a high degree of the skill of a person performing such work.

A main object of the present invention is to provide a remote-control apparatus for opening or closing the valve of a container particularly those containing gases such as arsine, phosphine, silane, diborane, dichlorosilane, hydrogen chloride, chlorine, etc as used for the production of semiconductor materials, which is not only suitable for opening and closing the valve of a container in a remote-controlled manner without relying upon the hands of a person, but which is further adapted to be very easily attached to or detached from the container during its location, transportation and replacement.

According to the invention this object is achieved by a remote-control apparatus according to the claim. The remote-control apparatus according to the invention thus comprises a rotary driving mechanism, an operable shaft driven by said driving mechanism and a coupling or clamp means mounted on said operable shaft. Said operable shaft has at one end a collar for preventing disengagement of said coupling means and axially elongated grooves adjacent thereto, while said coupling means has therein a through-hole for said operable shaft and pawl members engageable within notches formed in the peripheral edge of a valve wheel of said container. Said through-hole is provided in the inner wall thereof with axially elongated grooves to be in engagement with the first-mentioned elongate grooves, and said coupling means being movably arranged relative to the axis of said operable shaft. The housing of the remote-control apparatus is seperately supported from the container.

More specificall, the operable shaft is reciprocally rotated by the rotary driving mechanism which is reciprocally rotatable in a remote-controlled manner. The coupling means for engaging and locking the valve wheel of the container is fitted over the operable shaft. The operable shaft has at one end a collar for preventing disengagement of the coupling means and a number of axially elongated grooves. On the other hand, the coupling means has a plurality of pawl members which are engageable within notches formed in the peripheral edge of the valve wheel, and has therein a through-hole through which the operable shaft is inserted. The through-hole is provided in the inner wall thereof with a number of elongate grooves to be in engagement with the first-mentioned grooves. The clamp is moved toward the end of the operable shaft into spline or serration engagement therewith, thereby to engage the valve wheel with the pawl members of the clamp. The rotary driving mechanism is driven in a remote-controlled manner to rotate the operable shaft and turn the valve wheel by the pawl members of the clamp, whereby the valve is opened or closed. To remove the valve-opening or closing apparatus from the container, the clamp is moved toward the rotary driving mechanism to disengage the pawl member of the clamp from the valve wheel and the clamp from the operable shaft. Thus, the replacement and transportation of the container is very easy.

Brief Description of the Drawings

The foregoing and other objects and features of the present invention will become apparent from the following detailed description with reference to the accompanying drawings, in which:-

FIGURE 1 is a perspective view illustrative of the casing or housing for a gas cylinder,

FIGURE 2 is a perspective view showing one embodiment of the remote-control apparatus for opening or closing the valve of a container when in use,

FIGURE 3 is a perspective view showing an alternative embodiment of that apparatus when in use,

FIGURE 4 is an exploded view, partly cut-away, of the operable shaft crank of the remote-control apparatus for opening or closing the valve of a container, and

FIGURE 5 is a perspective view showing the operating shaft and crank of that apparatus in an assembled state.

Detailed Explanation of the Invention

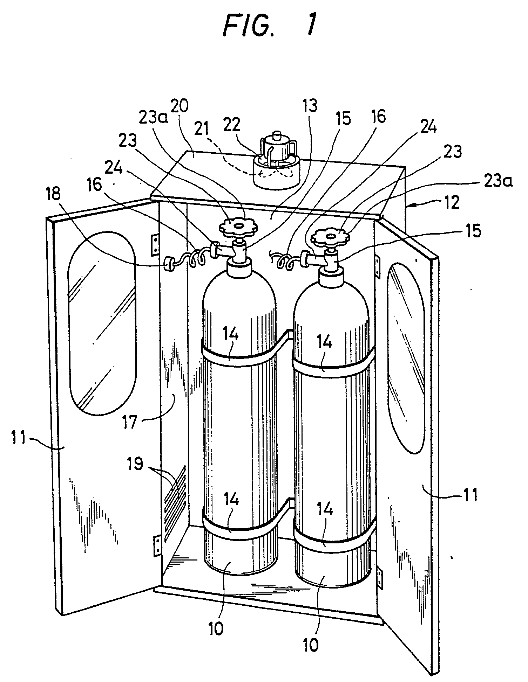

A cylinder filled with gases such as arsine, phosphine, silane, diborane, dichlorosilane, hydrogen chloride, chlorine, etc. is usually arranged in a casing or housing and isolated from the air so as to prevent the filled gas from diffusing to the air. This will be explained with reference to FIGURE 1. A gas cylinder 10 filled therein with a toxic gas is arranged in a casing or housing 12 formed of a steel plate, etc., and provided at the front with doors 11 and 11 for carrying in or out that cylinder. Fastening means 14 such as chains or belts are attached to the rear plate 13 of the housing 12 so as to prevent toppling of the cylinder 10. The gas within the cylinder 10 is supplied through a connection fitting 18 inserted airtightly through, e.g., a side wall 17 of the housing 12 to the user by way of a pipe 16 connected to a metal valve housing cap 15 of the cylinder 10. An air inlet 19 is provided in the lower portion of the side wall of the housing 12, and an air discharge port 22 is formed in a ceiling portion 20, said port 22 being equipped with a ventilating fan 21.

The cylinder 10 filled therein with a gas such as toxic gas is placed in the housing 12, and isolated from the environment by closing the doors 11 and 11. Even when the hazardous toxic gas leaks in this arrangement, it is designed to be arrested in a remover device (not shown) properly engaged within the discharge port 22.

When a hazardous toxic gas is employed by such means, however, opening or closing of a valve (not shown) attached to the cap 15 is still carried out by manual turning of a valve wheel 23, while the doors 11 and 11 remain opened. In consequence, the connection 24 between the cap 15 and the pipe 16 or the cap 15 per se may be short in airtightness, when the valve is opened or closed by turning of the valve wheel 23. This may result in the leakage of the hazardous toxic gas, to which the operator is directly exposed, and is not only very dangerous, but also causes unpreferred diffusion of the gas to the environment. Thus, the isolation of the cylinder 10 from the environment by placing it within the housing 12 does not assure any satisfactory safety. It is still demanded to open or close the valve by turning the valve wheel 23 in an unattended, say, remote-controlled manner, after the doors 11 and 11 have been closed to accommodate the cylinder completely within the housing 12 and isolate it from the outside air.

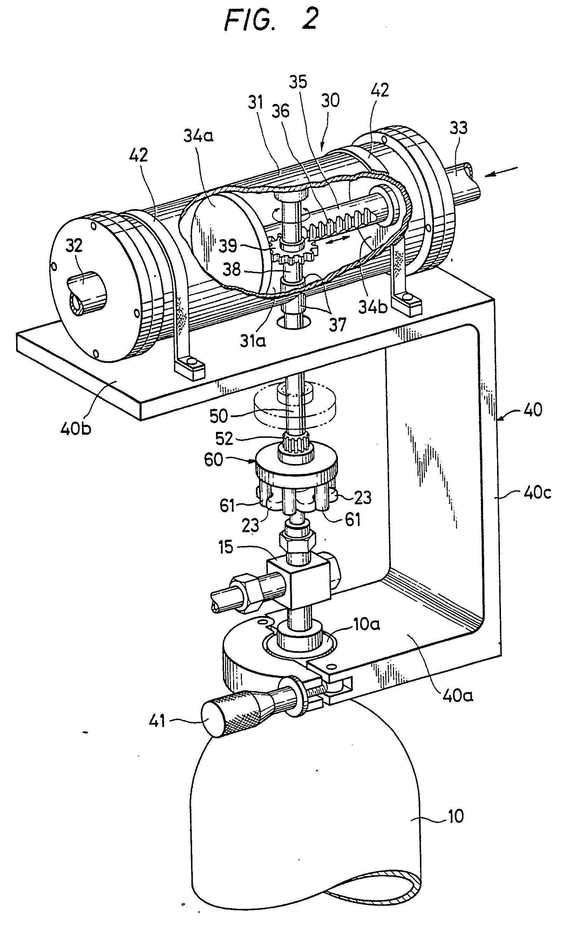

To this end, the present inventor has accomplished the remote-control apparatus for opening or closing the valve of a container, as shown in FIGURES 2 to 5 inclusive.

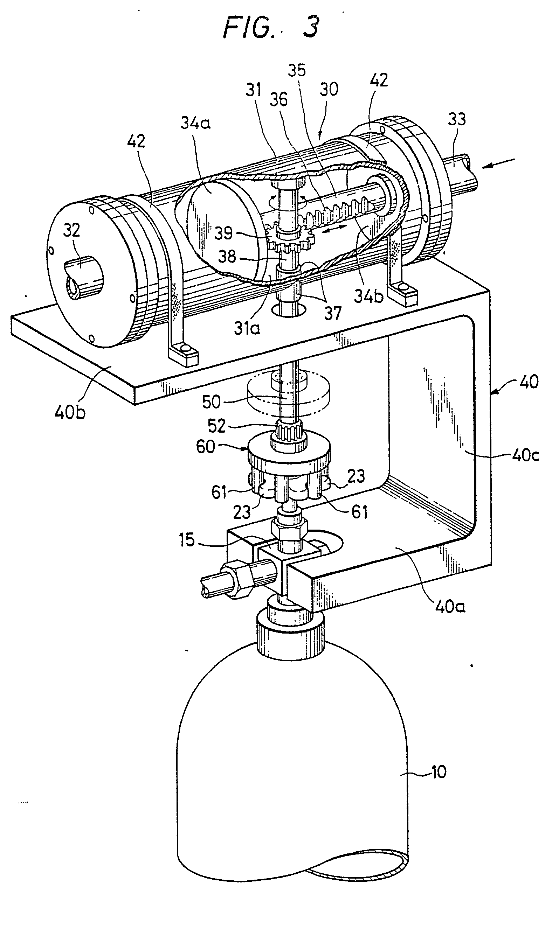

The reciprocally rotary driving mechanism used in the present invention may be of the known types including electric and pneumatic types, In the embodiments as shown in FIGURES 2 and 3, use is made of the rotary driving mechanism 30 of the pneumatic type. As illustrated in FIGURE 2, a framework 40 includes a first member 40a to which a cylinder 10 is attached and a second member 40b to which the driving mechanism 30 is attached, said first and second members being integrally joined to each other by means of a connecting plate 40c. The framework 40 is then fixed at the first member 40a into a neck 10a of the cylinder 10 by fastening means 41. Alternatively, the framework 40 is fixed at the first member 40a to a metal cap 15 of the cylinder 10, as illustrated in FIGURE 3. The framework 40 may be mounted within the housing 12 by suitable fastening means such as bolts.

The driving mechanism 30 is then fixed on the second member 40b by means of fixing members 42 such as bolts and belts.

The driving mechanism 30 includes a cylindrical body 31 having air inlets 32 and 33 on its both sides. Two pressure-receiving disks 34a and 34b are movably inserted in the body 31 in airtight relation with respect to the inner wall 31a thereof, and is secured to both ends of a connecting rod 35. The disks 34a and 34b are thus disposed within the cylindrical body 31 for horizontal movement. The connecting rod 35 is formed with a rack 36 which is to mesh with a gear wheel 39 fixed to a rotary shaft 38 having one end supported on a bearing 37. An amount of pressurized air is introduced into the pneumatic rotary driving mechanism 30 from the lefthand air inlet 32 to move the disks 34a and 34b in the righthand direction. The result is that the gear wheel 39 in engagement with the rack 36 on the connecting rod 35 rotates clockwise. This clockwise rotation is subsequently transmitted to an operable shaft 50 which is connected at the upper end to the rotary shaft 38.

The operable shaft 50 extends downwardly through the second member 40b and terminates on the valve wheel 23 of the gas cylinder 10. The operable shaft 50 is provided at its lower end with a collar 51 as a means for preventing disengagement of a clamp or coupling means 60, and is formed in a portion adjacent thereto and thereabove with a number of elongate grooves 52 over a length at least corresponding to the thickness of the clamp 60.

The clamp 60 is provided with downward pawls 61 which are engageable within notches 23a (see FIGURE 1) formed in the peripheral edge of the valve wheel 23 with a through-hole 62 for the operable shaft 50, which is axially provided in the inner wall with elongate grooves 63 engageable with the grooves 52 in the operable shaft 50.

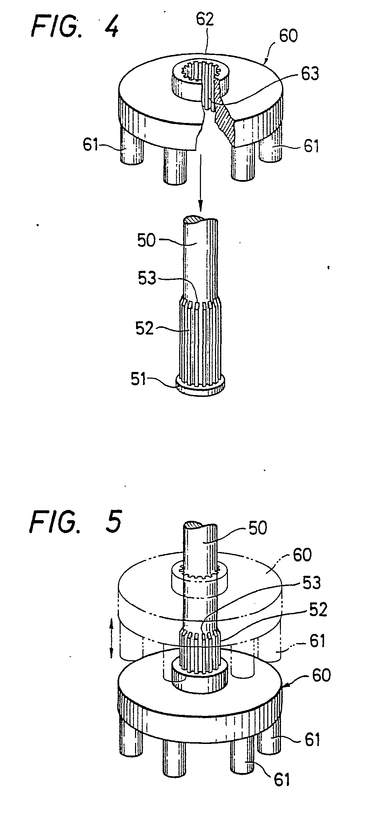

The operable shaft 50 is inserted into the through-hole 62 from below the clamp 60 for assembling, as shown in FIGURE 5, and is connected at the upper end to the rotary shaft 38 of the rotary driving mechanism 30. When operable shaft 50 is assembled with the clamp 60, the grooves 63 may in some cases not be in engagement with the associated grooves 52. In this case, the clamp 60 does not reach the collar 51 of the operable shaft 50, as illustrated by a two-dotted chain line in FIGURE 5, and is rotatably supported on the upper ends 53a of the grooves 52. However, when the clamp 60 moves downward to engage both grooves 52 and 63 with each other, the clamp 60 reaches the collar 51 of the operable shaft 50, so that the shaft 50 and the clamp 60 are in spline or serration engagement with each other, and rotate together.

The apparatus according to the present invention operates in the following manner.

In FIGURE 2 or 3, the supply of pressurized air from the lefthand air inlet 32 is cut off, and is initiated from the righthand air inlet 33. Thereupon, the pressure-receiving disks 34a and 34b move together with the connecting rod 35 in the lefthand direction, so that the gear wheel 39 in mesh with the rack 36 of the connecting rod 35 rotates counterclockwise, and the operable shaft 50 connected thereto through the rotary shaft 38 rotates in the same direction. As a result, the clamp 60 engages the operable shaft 50 in the grooves 52 and 63, and rotates counterclockwise to rotate the valve wheel 23 of the cylinder 10 in the same direction, whereby the valve is opened.

In this state, the suction of pressurized air from the righthand air inlet 33 is cut off, and the supply of pressurized air from the lefthand air inlet 32 is initiated. Thereupon, the pressure-receiving disks 34a and 34b move together with the connecting rod 35 in the righthand direction to rotate the clamp 60 through the rotary shaft 38 and the operable shaft 50 and hence the valve wheel 23 of the cylinder 10 in the righthand direction, whereby the valve is closed.

With the pneumatic type rotary driving mechanism 30, it is thus possible to optionally open or close the valve by supplying pressurized air to either one of the air inlets 32 and 33 of the cylinder body 31 depending upon the rotational direction for opening or closing the valve.

While the foregoing embodiments have been explained with reference to the rotary driving mechanism 30, it is understood that the present invention may make use of other known mechanisms including a remote-controllable element, such as, for instance, an electric motor.

To remove the apparatus of the present invention from the gas cylinder 10, the clamp 60 is lifted up along the narrow grooves 52 and 63 in engagement, until the bottom face of the clamp 60 is located above the upper ends 53a of the grooves 52 in the operable shaft 50. Thereafter, the clamp 60 is turned to disengage the grooves 63 out of the associated grooves 53, so that the clamp 60 is supported on the upper ends 53a of the grooves 52 in the operable shaft 50, as illustrated by a two-dotted chain line in FIGURES, with the pawls 61 disengaging the associated notches 23a formed in the valve wheel 23. The gas cylinder 10 is separated from the framework 40, and removed from the housing 12. Then, another cylinder 10 filled with another gas is placed within the housing 12, and is secured to the framework 40. The clamp 60 is adjustably rotated to engage the groove 63 with the associated grooves 52, so that the clamp 60 is guided downwardly along the grooves 52 and 63 in engagement. As illustrated by a solid line in FIGURE 2 or 3, the pawls 61 of the clamp 60 engage within the notches 23a formed in the valve wheel 23 of the cylinder 10, and the clamp 60 engages with operable shaft 50 through their elongate grooves into one piece. Thus, the replacement of one used-up gas cylinder with another gas cylinder can be achieved in a very simplified manner.

In this manner, it is possible to open or close the valve of the gas cylinder 10 at need by rotating the operable shaft 50 with the use of the rotary driving mechanism 30 in a remote-controlled manner. Therefore, once the apparatus of the present invention is mounted within the housing 12, the valve of the gas cylinder 10 placed in the housing 12 with the doors 11 and 11 being closed for isolation from the environment can be remote-controlled operating the rotary mechanism 30 from the outside of the housing 12 in an unattended manner.

For further assurance of safety, it is also possible to automatically close the valve of the gas cylinder 10 by allowing the rotary driving mechanism 30 to operate in association with a gas leak or earthquake sensor, when a gas leak or earthquake occurs.

As mentioned above, since the clamp 60 is mounted to the operable shaft 50 for axial movement, and the valve of the cylinder 10 is opened or closed in a controlled manner, opening or closing of the valve of a container filled therein with a very hazardous gas or toxic gas is achieved without relying upon hands, thus leading to further assurance of safety. The apparatus of the present invention is very easily attached to or detached from the gas cylinder, regardless of the form of the valve wheel used, thus improving further workability.

## Claim

A remote-control apparatus for opening or closing a container, including a rotary driving mechanism (30) fixed to a framework (40) adapted to be secured to the neck of the container or a valve housing cap thereof, an operable shaft (50) driven by said driving mechanism, and coupling means (60) mounted on said operable shaft and having means (61) engageable with a valve wheel (23) of said container, characterized in that said means (61) being engageable with the valve wheel (23) comprises pawl members (61) being engageable with the valve wheel (23), in that said operable shaft (50) has at one end means (51) for preventing disengagement of said coupling means and axially elongate grooves (52) adjacent thereto, said coupling means has a through-hole (62) for said operable shaft, said through-hole (62) being provided in the inner wall thereof with axially elongate grooves (63) adapted to engage the first-mentioned elongate grooves (52), said coupling means (60) being movably arranged relative to the axis of said operable shaft (50), and in that the housing of the remote-control apparatus is separately supported from the container.

**Patentanspruch**

Fernsteuervorrichtung zum Öffnen oder Schliessen eines Behälters, mit einem Drehantriebsmechanismus (30), der an einem am Behälterhals oder einer Ventilgehäusekappe des Behälters befestigbaren Rahmen (40) gehalten ist, einer vom Antriebsmechanismus angetriebenen Betätigungswelle (50) und einer an der Betätigungswelle gehaltenen Kupplungseinrichtung (60) mit einer Einrichtung (61), die mit einem Ventilrad (23) des Behälters in Eingriff bringbar ist, dadurch gekennzeichnet, dass die mit dem Ventilrad (23) in Eingriff bringbare Einrichtung (61) mit dem Ventilrad (23) in Eingriff bringbare Mitnehmerelemente (61) umfasst, dass die Betätigungswelle (50) an einem Ende eine Einrichtung (51), die eine Aussereingriffnahme der Kupplungseinrichtung verhindert, und axial verlaufende langgestreckte Nuten (52) nahe der besagten Einrichtung aufweist, wobei die Kupplungseinrichtung eine Durchgangsbohrung (62) für die Betätigungswelle enthält, welche an ihrer Innenwand mit axial verlaufenden langgestreckten Nuten (63) versehen ist, die in Eingriff mit den erstgenannten langgestreckten Nuten (52) bringbar sind, und wobei die Kupplungseinrichtung (60) bewegbar relativ zur Achse der Betätigungswelle (50) angeordnet ist, und dass das Gehäuse der Fernsteuervorrichtung separat vom Behälter abgestützt ist.

**Revendication**

Dispositif de commande à distance de l'ouverture ou de la fermeture d'un récipient, comportant un mécanisme d'entraînement tournant (30) fixé à un châssis (40) adapté pour être lui-même fixé au col du récipient ou à un corps de robinet monté sur celui-ci, une tige de commande (50) actionnée par ledit mécanisme d'entraînement et un moyen de couplage (60), lequel est installé sur ladite tige de commande et possède un moyen (61) agissant sur une molette de robinet (23) dudit récipient, caractérisé en ce que ledit moyen (61) agissant sur la molette de robinet (23) comporte des broches d'entraînement (61) venant s'insérer dans la molette de robinet (23), ladite tige de commande (50) possède à une extrémité un moyen (51) empêchant ledit moyen de couplage de s'en dégager et des cannelures (52) prévues dans le sens axial à proximité dudit moyen (51), ledit moyen de couplage possède un orifice de passage (62) destiné à ladite tige de commande, la paroi intérieure dudit orifice de passage (62) étant prévue avec des cannelures axiales (63) adaptées pour s'engager dans la première série de cannelures (52) ci-dessus, ledit moyen de couplage (60) étant installé de façon à coulisser axialement le long de ladite tige de commande (50), et en ce que la cage du dispositif de commande à distance est supportée séparément du récipient.

# FIG. 1

## FIG. 2

# FIG. 3

FIG. 4

FIG. 5